Europäisches Patentamt

European Patent Office

Office européen des brevets

(11) Veröffentlichungsnummer: **0 379 091**

**A2**

(12) **EUROPÄISCHE PATENTANMELDUNG**

(21) Anmeldenummer: **90100629.6**

(22) Anmeldetag: **12.01.90**

(51) Int. Cl.5: **B29C 71/00, B29C 61/02, B29C 51/42**

(30) Priorität: **18.01.89 CH 170/89**

(43) Veröffentlichungstag der Anmeldung:
**25.07.90 Patentblatt 90/30**

(84) Benannte Vertragsstaaten:
**AT DE ES FR GB IT NL SE**

(71) Anmelder: **AG für Maschinen- und Werkzeugbau**
**Anlikerstrasse 20**
**CH-5610 Wohlen(CH)**

(72) Erfinder: **Mutti, Werner Hans**
**Rigistrasse 16**
**CH-5033 Buchs(CH)**

(74) Vertreter: **Blum, Rudolf Emil Ernst et al**
**c/o E. Blum & Co Patentanwälte Vorderberg 11**
**CH-8044 Zürich(CH)**

(54) **Verfahren und Vorrichtung zur Wärmebehandlung thermogeformter Gegenstände.**

(57) Um die Temperaturfestigkeit von thermogeformten Gegenständen (2) aus kristallisierbarem Kunststoff zu erhöhen, erfolgt nach der Formung eine Wärmebehandlung zur Nachkristallisation. Diese wird beendet durch das Einführen einer positiven, massgenauen, gekühlten Form (12) in den wärmebehandelten Gegenstand (2). Durch das Abkühlen findet eine geringfügige Schrumpfung des Materials statt, so dass sich der Gegenstand (2) an die gekühlte Form (12) anlegt. Damit wird eine hohe Massgenauigkeit der nacherwärmten, temperaturfesten Gegenstände erzielt.

Fig. 4

EP 0 379 091 A2

# Verfahren und Vorrichtung zur Wärmebehandlung thermogeformter Gegenstände

Die Erfindung betrifft ein Verfahren und eine Vorrichtung zur Wärmebehandlung thermogeformter Gegenstände.

Die physikalischen und technischen Eingeschaften von polymeren Werkstoffen sind nicht nur durch die Zusammensetzung und den chemischen Aufbau bestimmt, sondern hängen insbesondere auch von der Verarbeitung des Materials ab. So ist es bekannt, dass bei thermoplastischen Kunststoffen die sog. Kristallinität von der Art und Weise der Wärmezufuhr bei der Verarbeitung abhängt. Die Kristallinität, das heisst der Anteil von kristallartig geordneten Molekülen, beeinflusst die physikalischen Eigenschaften der Kunststoffe. Eine höhere Kristallinität führt z.B. zu einer mechanisch spröden, jedoch höher temperaturbeständigen Struktur.

Beim Thermoformen, insbesondere beim Tiefziehen von Gegenständen aus kristallisierbaren, thermoplastischen Kunststoffen, wie z.B. PETP darf deshalb nicht bei zu hohen Temperaturen verformt werden. Um dennoch die erwünschte, höhere Temperaturbeständigkeit zu erzielen, werden die Gegenstände nach ihrer Formung zur Nachkristallisation auf eine höhere, die sog. Kristallisationstemperatur erwärmt. Dies erfolgt bisher in der Tiefziehform, um möglichst eine Verformung der Gegenstände bei der Nacherwärmung zu verhindern. Es zeigt sich indessen, dass dabei dennoch Massungenauigkeiten unvermeidbar sind, welche sich besonders in der Abkühlphase durch unkontrolliertes Schrumpfen einstellen. Die so hergestellten Gegenstände weisen deshalb Massungenauigkeiten auf, die ihren Verwendungszweck beschränken und bei allfälliger Weiterverarbeitung stören. Dies ist etwa der Fall bei Gegenständen, die zur Weiterverarbeitung ineinander stapelbar sein müssen, wie zum Beispiel bei Schalen aus PETP, in welche später Fertigmahlzeiten abgefüllt werden.

Es stellt sich deshalb die Aufgabe, ein Verfahren und eine Vorrichtung zu schaffen, welche es erlauben, tiefgezogene Gegenstände einer Nachkristallisation zu unterziehen und gleichzeitig eine sehr gute, reproduzierbare Masshaltigkeit zu erzielen.

Diese Aufgabe wird durch die in den Patentansprüchen angegebenen Merkmale gelöst.

Zusätzlich lässt sich mit der erfindungsgemässen Lösung der Vorteil verbinden, die Tiefziehwerkzeuge besser auszunutzen, indem der Arbeitstakt unabhängig von der Nachkristallisation bleibt, weil diese in eine separate Vorrichtung verlegt werden kann.

Das erfindungsgemässe Verfahren und die entsprechende Vorrichtung gestatten es, eine Nachkristallisation unter optimalen Bedingungen bei exakter Masshaltigkeit der thermogeformten Gegenstände zu erzielen. Diese weisen danach eine erhöhte Temperaturfestigkeit auf und eignen sich insbesondere als Verpackung für Fertigmahlzeiten, welche backofen-bzw. mikrowellenofenbeständig sind.

Nachfolgend wird ein Ausführungsbeispiel der Erfindung anhand der beiliegenden Zeichnungen näher erläutert. Darin zeigen:

Fig. 1 den Tiefziehvorgang in schematischer Darstellung;

Fig. 2 eine tiefgezogene Schale vor der Nachkristallisation;

Fig. 3 eine Vorrichtung zur Nachkristallisation mit darin befindlicher Schale in einer ersten Phase;

Fig. 4 die Vorrichtung nach Fig. 3 in einer zweiten Phase mit eingefahrener Kühlform;

Fig. 5 die Kühlform in ausgefahrener Lage, und

Fig. 6 eine schematische Darstellung einer Vorrichtung zur Nachkristallisation.

Wie bereits einleitend ausgeführt wurde, können die Eigenschaften thermogeformter Gegenstände aus kristallisierbarem thermoplastischen Kunststoff durch Nachkristallisation bei höheren als den Formungstemperaturen beeinflusst werden.

Das vorliegende Ausführungsbeispiel betrifft insbesondere Schalen aus PETP (Polyäthylenterephtalat), einem Kunststoff, der thermoformbar und kristallisierbar ist. Solche Schalen können zur Verpackung und Aufbewahrung von vorgekochten oder fertiggekochten Lebensmitteln verwendet werden, die in der Schale im Backofen oder im Mikrowellenherd erwärmt werden können. Selbstverständlich eignet sich das erfindungsgemässe Verfahren aber auch für andere Gegenstände und andere kristallisierbare Kunststoffe.

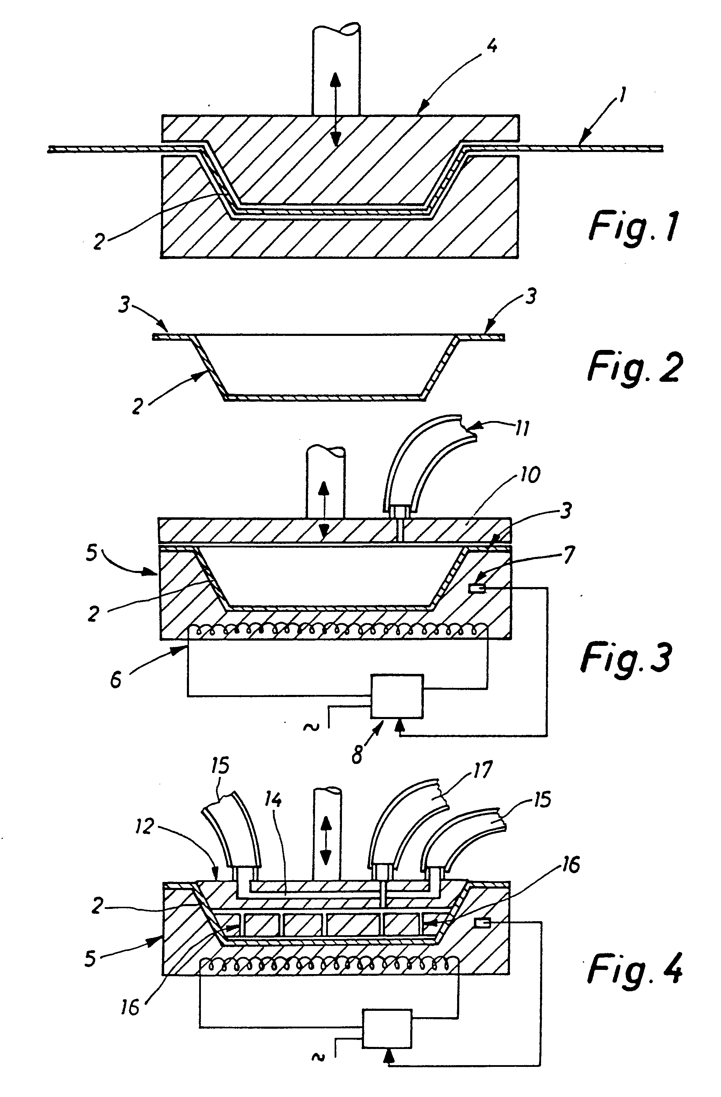

In einem ersten, bekannten Herstellungsschritt wird aus einer ebenen Folie 1 aus PETP mittels einem Tiefziehwerkzeug 4 oder einem anderen Thermoformverfahren eine Schale 2 geformt, wie in Fig. 1 schematisch gezeigt ist. Die Formungstemperatur bleibt unter der Kristallisationstemperatur und beträgt z.B. 120° C, um eine Verfestigung des Materials während dem Formen zu verhindern. Danach wird die Schale 2 als Zwischenprodukt in bekannter Weise aus der Folie 1 ausgestanzt, wobei ein umlaufender, horizontaler Rand 3 stehen bleibt (Fig. 2), mit welchem nach dem Abfüllen eine Deckfolie verschweisst wird. In diesem Zustand ist die Schale 2 bis zu Temperaturen von wenig über 200° C formstabil. Dies ist indessen zu wenig für eine Verwendung in Backöfen.

Zur erwähnten Nachkristallisation wird die Schale 2 in eine beheizte Negativform 5 gelegt, welche schematisch in den Fig. 3 und 4 dargestellt ist. Die Beheizung kann über eine elektrische Widerstandsheizung 6 erfolgen, welche über einen Temperaturmessfühler 7 und eine Regelschaltung 8 auf die jeweils eingestellte Temperatur geregelt wird. Die Kristallisationstemperatur kann z.B. in einem Bereich von 155° bis 175° C liegen. Die Negativform 5 ist mittels einer Deckplatte 10 schliessbar, die den Schalenrand 3 fixiert. In die Deckplatte 10 mündet eine Druckleitung 11, mittels welcher während der Kristallisation ein Ueberdruck in der Negativform erzeugt werden kann. Der Ueberdruck gewährleistet, dass die Schale 2 bei der Erwärmung zur Nachkristallisation ihre Form mindestens im wesentlichen behält. Zum gleichen Zweck wird der Schalenrand 3 fixiert.

Nach Ablauf der Kristallisationszeit, welche ebenfalls gemäss dem Material und dem Gegenstand einzustellen ist, wird die Deckplatte 10 entfernt. Statt dessen wird eine gekühlte, massgenaue Positivform 12 in den Schaleninnenraum eingeführt, wie sich aus Fig. 4 ergibt. Die Positivform 12 besitzt zu diesem Zweck z.B. Kühlkanäle 14, welche über Anschlüsse 15 an eine Kühlmittelquelle angeschlossen sind. In der vorliegend beschriebenen Ausführung wird die Positivform etwa auf Zimmertemperatur gekühlt, so dass als Kühlmittel Hahnenwasser verwendbar ist. Die Positivform 12 besitzt ferner Drucköffnungen 16, welche über einen Anschluss 17 an eine Druckquelle angeschlossen sind. Um die Schale 2 aus der beheizten Form 5 zu entnehmen, wird an die Drucköffnungen Unterdruck angelegt. Um die Schale 2 nach dem Abkühlen von der gekühlten Positivform 12 zu trennen, kann umgekehrt Ueberdruck an die Drucköffnungen 16 angelegt werden.

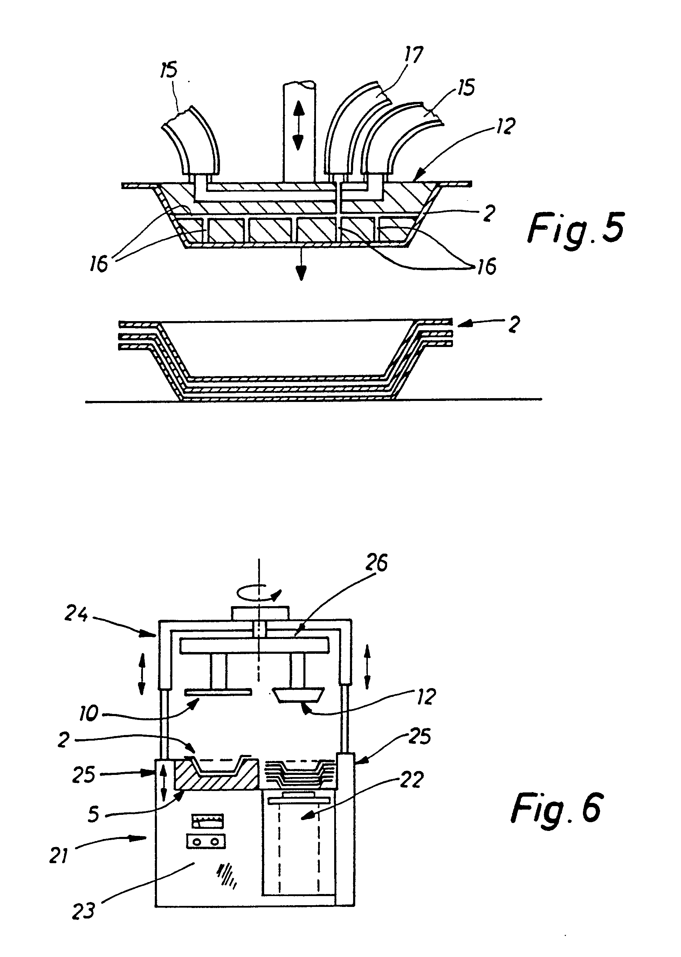

Wird die gekühlte Positivform 12 nun in die zur Nachkristallisation erwähnte Schale 2 gesenkt, so entzieht sie ihr durch Wärmeleitung Wärme. Durch den Wärmeentzug und die damit verbundene Abkühlung wird der Kristallisationsprozess gestoppt. Gleichzeitig unterliegt das Kunststoffmaterial einer geringfügigen Schrumpfung, so dass sich die Innenseite der Schale 2 an die Positivform 12 anlegt. Damit erhält die Schale 2 beim Abkühlen nach der Nachkristallisation eine massgenaue, den Abmessungen der gekühlten Positivform 12 exakt entsprechende Innen- und damit auch Aussenform. Nach ausreichendem Abkühlen auf eine Temperatur, bei welcher sich die Schalenform an der Positivform 12 stabilisiert hat, kann die Schale dann z.B. durch Anlegen von Ueberdruck an die Drucköffnungen 16 von der Positivform 12 getrennt werden, wie in Fig. 5 schematisch gezeigt ist.

Die so erzeugten, massgetreuen Schalen 2 können hernach mit kleinstem Spiel auf sich selbst gestapelt werden, wozu entsprechende Stapelflächen bekannter Art (nicht dargestellt) eingeformt sind. Die so behandelten, massgetreuen Schalen 2 können formstabil bis zu über 270° erhitzt werden und sind somit geeignet für den Gebrauch in Backöfen und Mikrowellenherden.

In Fig. 6 ist schematisch eine Maschine für das erläuterte Nachkristallisierverfahren dargestellt, welche von der Tiefzieheinrichtung getrennt ist und deren Arbeitstakt von demjenigen der Tiefzieheinrichtung unabhängig ist. Die Maschine besitzt einen unteren Maschinenteil 21, auf dem die beheizte Negativform 5 angeordnet ist. Ferner befindet sich darin ein Magazin 22 zur Aufnahme der wärmebehandelten Schalen sowie ein Steuerteil 23. Am unteren Maschinenteil 21 ist ein Hubtisch 24 angeordnet, der mittels Hubzylindern 25 angehoben und gesenkt werden kann. Der Hubtisch 24 ist mit einem rotierbaren Träger 26 versehen, der die Deckplatte 10 sowie die gekühlte Positivform 12 trägt. Die entsprechenden Anschlüsse der Druck- und Kühlwasserleitungen sind in Fig. 6 nicht gezeigt.

Nach dem Einlegen einer Schale 2 in die beheizte Negativform 5 wird der Hubtisch 24 gesenkt, bis die Deckplatte 10 auf der Negativform 5 aufliegt. Dann findet der Kristallisationsvorgang während einer definierten Zeit bei einer definierten Temperatur in der beschriebenen Weise statt. Anschliessend wird der Hubtisch 24 angehoben und der Träger 26 um 180° gedreht, so dass sich die gekühlte Positivform 12 nun über der Negativform 5 befindet. Nach erneutem Absenken wird die kristallisierte Schale 2 von der gekühlten Positivform erfasst, aus der Negativform herausgehoben und dabei formstabil gekühlt. Der Träger 26 wird dabei wieder um 180° zurückgedreht und für einen neuen Kristallisationsvorgang gesenkt, womit zugleich die nun gekühlte Schale 2 auf einem Stapel im Magazin 22 abgesetzt wird. Bei jedem Takt wird damit eine Schale kristallisiert und die vorangehende Schale gekühlt und gestapelt. Eine entsprechende Vorrichtung kann mit mehreren Negativformen 5 bzw. gekühlten Positivformen 12 bestückt werden, welche auf der Peripherie eines Kreises angeordnet sind, so dass pro Arbeitstakt eine entsprechend grössere Anzahl Schalen nachkristallisiert werden können.

Das beschriebene Ausführungsbeispiel kann in verschiedener Weise abgewandelt werden. Insbesondere kann anstelle einer beheizten Negativform eine beheizte Positivform verwendet werden, welche in der Art der gekühlten Form in die Schale eingeführt wird und diese auf Kristallisationstemperatur erwärmt. Damit kann auf Ueberdruck zur Stabilisierung der Schale während der Wärmebehandlung verzichtet werden. Die Abkühlung auf der positiven, gekühlten Form 12 kann dabei wie oben beschrieben erfolgen. Ferner kann als beheizte Form auch die Tiefziehform selbst verwendet werden, was allerdings den Arbeitstakt der Tiefziehmaschine entsprechend verlängert.

Das beschriebene Verfahren und die Vorrichtung zur Ausführung desselben haben den überraschenden Vorteil, dass mit dem Kristallisiervorgang zur Verbesserung der Materialeigenschaften zugleich eine Verbesserung der Massgenauigkeit der Gegenstände erzielt werden kann. Die Erfindung ist denn auch nicht auf die beschriebene Anwendung in Form von Schalen für Fertigmenus beschränkt, sondern eignet sich für sämtliche tiefgezogenen Gegenstände, deren Eigenschaften zur Nachkristallisation beeinflusst werden sollen.

**Ansprüche**

1. Verfahren zur Wärmebehandlung thermogeformter Gegenstände, dadurch gekennzeichnet, dass die geformten Gegenstände während einer bestimmten Zeit in einer beheizten Form auf Kristallisationstemperatur erwärmt und danach durch Einführen einer positiven, massgenauen, gekühlten Form abgekühlt werden.

2. Verfahren nach Anspruch 1, dadurch gekennzeichnet, dass als beheizte Form im wesentlichen eine Negativform des Gegenstandes verwendet wird.

3. Verfahren nach Anspruch 2, dadurch gekennzeichnet, dass die beheizte Negativform schliessbar ist, wobei der Innenraum während der Erwärmung des Gegenstandes unter Ueberdruck gesetzt wird.

4. Verfahren nach einem der Ansprüche 2 oder 3, wobei die Gegenstände Schalen mit umlaufendem Rand sind, dadurch gekennzeichnet, dass die beheizte Negativform mittels einem Deckel schliessbar ist, wobei der Deckel während der Erwärmung den Schalenrand fixiert.

5. Verfahren nach einem der vorangehenden Ansprüche, dadurch gekennzeichnet, dass der Gegenstand mittels der positiven, massgenauen, gekühlten Form aus der beheizten Form entnommen wird.

6. Vorrichtung zur Durchführung des Verfahrens nach einem der vorangehenden Ansprüche, gekennzeichnet, durch eine auf eine einstellbare Temperatur beheizbare Form (5) zur Aufnahme eines thermogeformten Gegenstandes (2), eine positive massgenaue, gekühlte Form (12) sowie eine Einrichtung (24,26) zum Einführen der gekühlten Form in den Gegenstand in seinem erwärmten Zustand.

7. Vorrichtung nach Anspruch 6, dadurch gekennzeichnet, das die beheizbare Form (5) als Negativform ausgebildet, deren Innenraum während der Erwärmung unter Ueberdruck setzbar ist.

8. Vorrichtung nach einem der Ansprüche 6 und 7, wobei der Gegenstand eine Schale mit umlaufendem Rand ist, dadurch gekennzeichnet, dass ein Organ (10) zur Fixierung des Randes (3) während der Erwärmung vorgesehen ist.

9. Vorrichtung nach einem der Ansprüche 6 bis 8, dadurch gekennzeichnet, dass die gekühlte, positive Form (12) im wesentlichen den gesamten Innenraum des Gegenstandes beaufschlagt.

10. Vorrichtung nach einem der Ansprüche 6 bis 9, dadurch gekennzeichnet, dass die gekühlte, positive Form (12) Mittel (16) zur Halterung des Gegenstandes an der Form bzw. zum Entfernen des Gegenstandes aus der Form aufweist.

11. Vorrichtung nach einem der Ansprüche 6 bis 10, dadurch gekennzeichnet, dass die beheizbare Form (5) und die gekühlte positive Form (12) derart angeordnet sind, dass die gekühlte Form (12) zur Entnahme der Gegenstände in die beheizbare Form ein-und ausfahrbar ist.

Fig. 1

Fig. 2

Fig. 3

Fig. 4

Fig.5

Fig.6